# EUROPÄISCHE PATENTANMELDUNG

(11) **EP 3 000 365 A1**
(43) Veröffentlichungstag der Anmeldung: **30.03.2016**
(21) Anmeldenummer: 14186267.2
(22) Anmeldetag: 24.09.2014
(51) Int. Cl.: A47J 31/44, A47J 31/46

(54) **Milchschäumergerät**

(71) Anmelder: Qbo Coffee GmbH, 8304 Wallisellen (CH)
(72) Erfinder: Balkau, Werner, 8762 Schwändi (CH)
(74) Vertreter: Frei Patent Attorneys

(57) **Zusammenfassung**

Ein erfindungsgemässes Gerät zum Zubereiten von geschäumter Milch ist an eine Getränkezubereitungsmaschine (101) andockbar und weist zu diesem Zweck mindestens einen Anschluss für von der Getränkezubereitungsmaschine erzeugten Wasserdampf sowie eine Schnittstelle für von der Getränkezubereitungsmaschine abgegebenen Strom auf. Weiter besitzt das Gerät eine Milchschäumeinheit mit einer Zahnradpumpe (7). Die Zahnradpumpe ist eingangsseitig mit einer Milchzuführleitung und einer Luftzuführung verbunden. Auf einem Pfad von von der Zahnradpumpe geförderter Milch ist ausserdem eine Mischdüse vorhanden, welcher diese Milch, der Wasserdampf sowie Luft zuführbar sind.

## Beschreibung

Die Erfindung betrifft das Gebiet der Geräte zum Zubereiten von Getränken. Sie betrifft insbesondere ein Gerät zum Erzeugen von Milchschaum und von Milchgetränken, welches an eine Getränkezubereitungsmaschine andockbar ist, sowie ein Getränkezubereitungssystem mit einem solchen Gerät.

Milchschäumergeräte als integrierte Module von Kaffeemaschinen oder als an Kaffeemaschinen andockbare separate Geräte sind bekannt. EP 2 047 779 zeigt eine Kaffeemaschine mit andockbarem Milchmodul, wobei heisser Dampf aus der Kaffeemaschine genutzt wird, um nach dem Venturi-Prinzip aus einem Gefäss des Milchmoduls angesaugte Milch zu schäumen.

Die wie die vorstehend beschriebene, auf dem Venturiprinzip beruhende Lösung kann nur heissen Milchschaum zubereiten. Oft wird jedoch auch die Zubereitung von kaltem Milchschaum gewünscht. Beispielsweise die EP 2 326 224 zeigt einen Milchschäumer, der eine Zahnradpumpe als zentrales schaumerzeugendes Element aufweist. Eingangsseitig der Zahnradpumpe saugt diese Luft und Milch an, die gleichzeitig mit der Förderung durch die Zahnräder geschäumt wird und ausgangsseitig als geschäumte Milch abgegeben wird. Optional kann in der Zahnradpumpe zusätzlich Wasserdampf zugeführt werden, damit die abgegebene geschäumte Milch warm ist.

Es ist eine Aufgabe der vorliegenden Erfindung, ein Gerät zum Erzeugen von Milchschaum zur Verfügung zu stellen, welches Nachteile des Standes der Technik überwindet und welches die Erzeugung von Milchschaum für eine Vielzahl von möglichen Benutzungsfällen ermöglicht.

Ein erfindungsgemässes Gerät zum Zubereiten von geschäumter Milch ist an eine Getränkezubereitungsmaschine andockbar und weist zu diesem Zweck mindestens einen Anschluss für von der Getränkezubereitungsmaschine erzeugten Wasserdampf sowie eine Schnittstelle für von der Getränkezubereitungsmaschine abgegebenen Strom auf. Weiter weist das Gerät eine Zahnradpumpe auf. Die Zahnradpumpe ist eingangsseitig mit einer Milchzuführleitung und mit einer Luftzuführung verbunden. Auf einem Pfad von von der Zahnradpumpe geförderter Milch ist ausserdem eine Mischdüse vorhanden, welcher diese Milch, der Wasserdampf sowie Luft zuführbar sind.

Die Gruppe mit Zahnradpumpe, zugehöriger Luftzuführung sowie den für den Flüssigkeitstransport zu der und von der Zahnradpumpe weg benötigten Leitungen aber ohne die Mischdüse wird in diesem Text auch ,Milchschäumeinheit' genannt. In Ausführungsformen kann die Milchschäumeinheit eingerichtet sein, dass ein Betriebsparameter abhängig von einem Messwert und/oder einer Benutzereingabe verstellbar ist. Mit "Verstellen" ist hier die Einflussnahme auf den mindestens einen Betriebsparameter der Milchschäumeinheit gemeint, welcher beeinflusst, wie diese während eines aktiven Milchschäumbetriebs wirkt; die Verstellbarkeit ist also verschieden von einem blossen "ein/aus", wie das aus dem Stand der Technik bekannt ist. Die Verstellbarkeit erfolgt insbesondere derart, dass ein vom Benutzer vorgegebener oder und/oder einer Steuerung vorgegebener Parameter einen Einfluss auf die Eigenschaften und/oder Quantität des erzeugten Milchschaums hat. Ein verstellbarer Betriebsparameter kann insbesondere eine Drehzahl der Zahnradpumpe oder die zugeführte Luftmenge (regelbar beispielsweise durch eine Ventileinheit mit einstellbarer Ventilöffnung) sein.

Die Mischdüse kann insbesondere so ausgebildet sein, dass einströmender Dampfder vom Dampfanschluss in die Mischdüse gelangt - in an sich bekannter Art eine Saugwirkung erzielt. Durch diese kann das Ansaugen von Luft und die Durchmischung mit der Mischdüse zugeführter Milch erfolgen, wodurch geschäumte Milch erzeugbar ist, welche aufgrund der vom Wasserdampf abgegebenen Wärmedie hauptsächlich, aber nicht ausschliesslich, als Kondensationswärme an die Milch abgegeben wird - warm ist. Diese Saugwirkung kann auf dem Bemoulli-Gesetz beruhen (wobei dann die Mischdüse bspw. als Venturi-Düse ausgebildet sein kann) und/oder auf Impulsübertragung basieren, wie das in Kombination für sogenannte "Strahlpumpen" an sich bekannt ist.

Die Zuführung von Luft in die Mischdüse kann in Ausführungsformen mit der Luftzuführung zum Eingang der Zahnradpumpe einen gemeinsamen Eingang haben und bspw. von der Milchschäumeinheit her erfolgen sowie gegebenenfalls ebenfalls durch die entsprechenden, nachstehend noch eingehender beschriebenen Regelmittel regelbar sein.

Alternativ kann die Luftzuführung in die Mischdüse auch einen separaten Eingang aufweisen und bspw. durch ein nach aussen in die Umgebung führendes Ventil gebildet sein, das sich bei Dampfzufuhr aufgrund eines dadurch erzeugten Unterdrucks in der Mischdüse selbsttätig öffnet. Ein solches Ventil kann insbesondere als Lippenventil ausgebildet sein.

Die Mischdüse kann so eingerichtet sein, dass eine Saugwirkung der beschriebenen Art auch für die in die Düse fliessende Milch besteht. Letzteres ist - aufgrund der Möglichkeit, die Milch durch die Zahnradpumpe zu fördern - jedoch nicht nötig. Vielmehr kann die Milch auch an einer Stelle in die Mischdüse gelangen, an welcher im Wesentlichen kein Unterdruck besteht.

Die Luftzuführung eingangsseitig der Zahnradpumpe kann ein- und ausschaltbar ausgebildet sein. Ein Ausschalten der Luftzuführung kann insbesondere dann sinnvoll sein, wenn ohnehin warmer Milchschaum erzeugt werden soll und die Zahnradpumpe nur zum Fördern der Milch verwendet wird.

Die Mischdüse kann beispielsweise unmittelbar über dem Milchschaumauslauf angeordnet sein.

Das Gerät zum Zubereiten von geschäumter Milch (Milchschäumergerät) kann sowohl kalte als auch warme geschäumte Milch zubereiten.

Zum Zubereiten von kalter geschäumter Milch wird durch die Zahnradpumpe Milch - insbesondere aus einem zum Milchschäumergerät gehörenden Milchgefäss - und gleichzeitig durch die Luftzuführung Luft angesaugt. Ausgangsseitig der Zahnradpumpe entsteht so geschäumte Milch. Dabei kann ausgangsseitig der Zahnradpumpe noch eine Drossel vorhanden sein; eine solche kann durch eine Verengung des Kanals für die geschäumte Milch gebildet werden.

Die geschäumte Milch kann über einen Milchschaumauslauf abgegeben werden. Auf dem Weg von der Zahnradpumpe zum Milchschaumauslauf kann sich die Mischdüse befinden, wobei, wenn kalte geschäumte Milch zubereitet werden soll, kein Dampf in diese geleitet wird und daher auch keine Luft in die Mischdüse gesaugt wird. Die Mischdüse dient in diesem Fall nur dem Durchleiten der geschäumten Milch.

Es ist auch möglich, die Leitungen für kalten Milchschaum von der Pumpe her und für warmen, in der Mischdüse hergestellten Milchschaum bis zum Auslauf voneinander separat zu halten, d.h. der kalte Milchschaum wird dann nicht durch die Mischdüse geleitet. Der Milchschaumauslauf kann dann voneinander separate Öffnungen für den kalten und den warmen Milchschaum aufweisen, bspw. zueinander konzentrisch. Auch gänzlich separate, räumlich voneinander deutlich getrennte Milchschaumausläufe für den kalten und den warmen Milchschaum sind denkbar.

Zum Zubereiten von warmer geschäumter Milch kann ebenfalls über die Zahnradpumpe Milch angesaugt und gefördert werden. Der Mischdüse wird nebst der Milch auch Wasserdampf aus der Getränkezubereitungsmaschine zugeführt. Diese erzeugt die vorstehend diskutierte Saugwirkung. Durch die Vermengung von kalter Milch, Dampf und Luft in der Mischdüse entsteht warme geschäumte Milch.

Die Luftzuführung zur Zahnradpumpe hin kann - sofern diese Möglichkeit vorgesehen ist - bei der Zubereitung von warmer geschäumter Milch optional ausgeschaltet sein. Sofern dies nicht vorgesehen ist oder nicht gewünscht wird, wird die Milch, sofern sich die Mischdüse wie bevorzugt hinter der Zahnradpumpe befindet, noch im kalten Zustand vorgeschäumt.

Optional kann auch die Luftzuführung zur Mischdüse verschliessbar ausgestaltet sein; dann ist auch die Zubereitung von nicht geschäumter warmer Milch möglich.

Der Benutzer kann dann auch die Zahnradpumpe verwenden, um die kalte Milch bloss zu fördern.

In Ausführungsformen weist die Milchschäumeinheit ein Gehäuse auf. Dieses bildet - unter Umständen zusammen mit einem Deckel (welcher hier zum Gehäuse gerechnet wird) und/oder anderen Elementen eine Zahnradpumpenkammer. Diese wird nach unten durch eine Dichtung begrenzt. Die Dichtung ist als zusammenhängendes Objekt mit mindestens einer Ventilöffnung für die angesaugte Milch ausgebildet. Unterseitig der Dichtung und am Gehäuse befestigt oder durch dieses ausgebildet befindet sich eine Leitung für die anzusaugende Milch sowie:
- ein Elektromotor der Zahnradpumpe, welcher die Zahnräder über eine durch die Dichtungsebene hindurch ragende Welle antreibt,
- eine Ventileinheit für die Luftzuführung
- Eine Leitung der Luftzuführung;
- Eine zur Zahnradpumpe führende Luftzuführleitung; und/oder
- Ein Übergang zu einem Andockelement, welches zum Andocken an die Getränkezubereitungsmaschine dient den Anschluss für den Wasserdampf sowie die Schnittstelle aufweist.

Diese Elemente können je allein oder in beliebiger Kombination unterseitig der Dichtung vorhanden sein.

Für den Übergang der Milch von der Unter- zur Oberseite sowie gegebenenfalls für den Übergang der Luft von der Unter- zur Oberseite sowie gegebenenfalls für den Übergang von durch eine separate Leitung zuführbarem Reinigungswasser oder Reinigungsdampf in die Flüssigkeitsleitung kann/können durch die Dichtung selbst ein Lippenventil bzw. Lippenventile ausgebildet sein.

Diese Konstruktion ermöglicht auf sehr einfache Art ein Abdichten zwischen dem (oberseitigen) Bereich, in welchem geschäumt wird, einerseits, und dem Bereich der Zuführungen und der elektrisch betriebenen Teile andererseits. Durch den einfachen Aufbau mit einer einzigen Dichtung ergeben sich auch wichtige Vorteile in Bezug auf die Reinigung.

Zusätzlich zum genannten Anschluss für den Wasserdampf kann das Milchschäumergerät einen weiteren Anschluss für von der Getränkezubereitungsmaschine abgegebenes, beispielsweise heisses, Wasser und/oder für Wasserdampf aufweisen, welches Wasser bzw. welcher Dampf zum Durchspülen und zur Reinigung verwendbar ist. Von diesem Anschluss für das Reinigungswasser bzw. den Reinigungsdampf aus kann eine Leitung vorhanden sein, die beispielsweise in die Milchschäumeinheit mündet und gegebenenfalls dem Durchspülen und unter Umständen auch Entkeimen der Zahnradpumpe inklusive Zu- und Wegführleitungen dient. Zwischen dieser Leitung und der Eingangsseite der Zahnradpumpe kann ein Ventil, bspw. Lippenventil, vorhanden sein, das sich selbsttätig schliesst wenn im Bereich vor der Zahnradpumpe ein geringerer Druck vorhanden ist als in der Leitung, wie das während des Betriebs der Zahnradpumpe ohne Zuführung von Reinigungswasser oder -dampf in der Regel der Fall sein wird.

Wie bereits erwähnt kann die Milchschäumeinheit einen Behälter zum Aufnehmen von Milch aufweisen. In Ausführungsformen sind der Behälter sowie die Milchschäumeinheit in ihrer Geometrie so aufeinander abgestimmt, dass die Milchschäumeinheit auf dem Behälter platziert werden kann und diesen abschliesst. Weiter kann optional ein Deckel vorhanden sein, der sowohl auf die auf dem Behälter platzierte Milchschäumeinheit als auch direkt auf den Behälter passt - was sehr praktisch ist, wenn der Behälter nach Gebrauch nicht leer ist und im Kühlschrank versorgt werden soll.

Die Erfindung betrifft auch ein Getränkezubereitungssystem mit einem Gerät der beschriebenen Art und zusätzlich einer Getränkezubereitungsmaschine. Die Getränkezubereitungsmaschine - beispielsweise Kaffeemaschine - weist bspw. einen Wasserbehälter, eine Wasserpumpe und einen Wassererhitzer auf. Weiter ist eine Brühkammer zum Zubereiten des Heissgetränks aus erhitztem Wasser durch Extraktion aus einem Extraktionsgut vorhanden. Die Getränkezubereitungsmaschine kann ausserdem eine Elektronikeinheit aufweisen, welche die vorstehend diskutierte Ansteuerung entweder beinhaltet oder - wenn diese Teil des Milchschäumergeräts ist - mit ihr in Kommunikationsverbindung steht. Eingaben des Benutzers erfolgen bevorzugt an einer Eingabestelle dieser Elektronikeinheit, ebenso erfolgt gegebenenfalls durch diese eine Erkennung einer Kaffeekapsel mit dem Extraktionsgut. Auch die Steuerung des Wasserdampfflusses erfolgt durch dieses Elektronikmodul.

Nachfolgend werden Ausführungsbeispiele der Erfindung anhand von Figuren beschrieben. In den Figuren bezeichnen gleiche Bezugszeichen gleiche oder analoge Elemente. Es zeigen:
- Fig. 1: eine Ansicht des Geräts zum Zubereiten von geschäumter Milch (Milchschäumergeräts);
- Fig. 2: eine Explosionsdarstellung des Milchschäumergeräts;
- Fig. 3: eine Explosionsdarstellung der Milchschäumeinheit des Milchschäumergeräts;
- Fig. 4: eine Ansicht der entlang einer horizontalen Ebene angeschnittenen Milchschäumeinheit;
- Fig. 5: eine teilweise Ansicht der Dichtung der Milchschäumeinheit mit Elementen der Zahnradpumpe;
- Fig. 6: eine Ansicht des entlang einer horizontalen Ebene angeschnittenen oberen Grundgehäuseteils der Milchschäumeinheit;
- Fig. 7: eine Ansicht des oberen Grundgehäuseteils von unten;
- Fig. 8: eine Ansicht des entlang einer vertikalen Ebene angeschnittenen oberen Grundgehäuseteils;
- Fig. 9: eine Ansicht der Ventileinheit der Milchschäumeinheit;
- Fig. 10: eine Explosionsdarstellung der Ventileinheit;
- Fig. 11a-11c: die Ventileinheit in Grundriss, Seitenriss und Aufriss;
- Fig. 12: eine Ansicht der Milchschäumeinheit mit Ventileinheit von oben;
- Fig. 13: eine Darstellung der Milchschäumeinheit, entlang einer Ebene durch die Ventileinheit geschnitten;
- Fig. 14a-14b: Ansichten des Andockelements von schräg oben bzw. schräg unten;
- Fig. 15a-15d: Ansichten des Ergänzungsteils;
- Fig. 16a-16b: Ansichten des Grundkörpers;
- Fig. 17a-17d: Darstellungen des Andockelements ohne äusseres Gehäuse;
- Fig. 18a-18c: Darstellungen von Teilen des Geräts, aus denen die Funktion des Andockelements ersichtlich ist;

- Fig. 19: eine Ansicht eines Getränkezubereitungssystems mit dem Milchschäumergerät;
- Fig. 20: ein Detail des Getränkezubereitungssystems, entlang einer vertikalen Ebene angeschnitten dargestellt;
- Fig. 21: ein Detail zum Andocken des Milchschäumergeräts an die Getränkezubereitungsmaschine;
- Fig. 22: eine Ansicht eines Details des Milchschäumergeräts; und
- Fig. 23: ein Schema des Getränkezubereitungssystems.

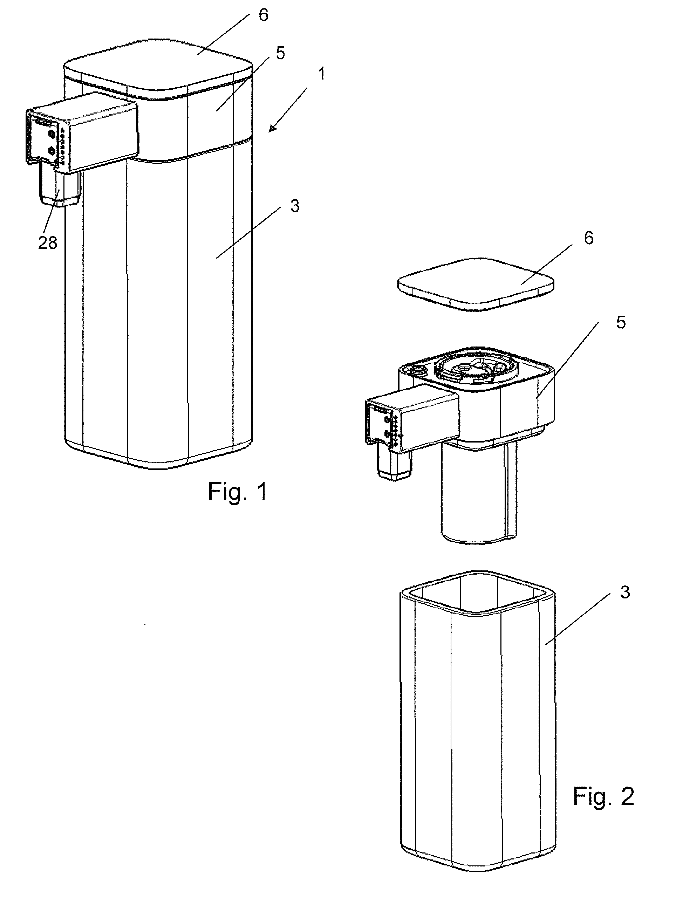

Das Gerät 1 zum Zubereiten von geschäumter Milch (Milchschäumergerät) ist als Ganzes in Figur 1 dargestellt. Figur 2 zeigt eine Explosionsdarstellung seiner Teile. Das Gerät 1 weist einen Milchbehälter 3, eine Milchschäumeinheit 5 und einen Deckel 6 auf.

Der Milchbehälter 3 ist in der dargestellten Ausführungsform zu Wärmeisolationszwecken doppelwandig ausgestaltet; auch einwandige Ausgestaltungen sind möglich. Er kann durchsichtig sein oder ein Sichtfenster zum Überprüfen des Milchstandes aufweisen.

Der Milchbehälter 3 und Deckel 6 können so aufeinander abgestimmt sein, dass der Deckel 6 auch direkt auf den Milchbehälter 3 aufsetzbar ist, ohne dazwischen angeordnete Milchschäumeinheit 5, wodurch der gefüllte Milchbehälter mit Deckel bspw. in den Kühlschrank gestellt werden kann; auch können Milchbehälter und Deckel auf einfache Weise gereinigt werden und bspw. spülmaschinenfest ausgebildet sein.

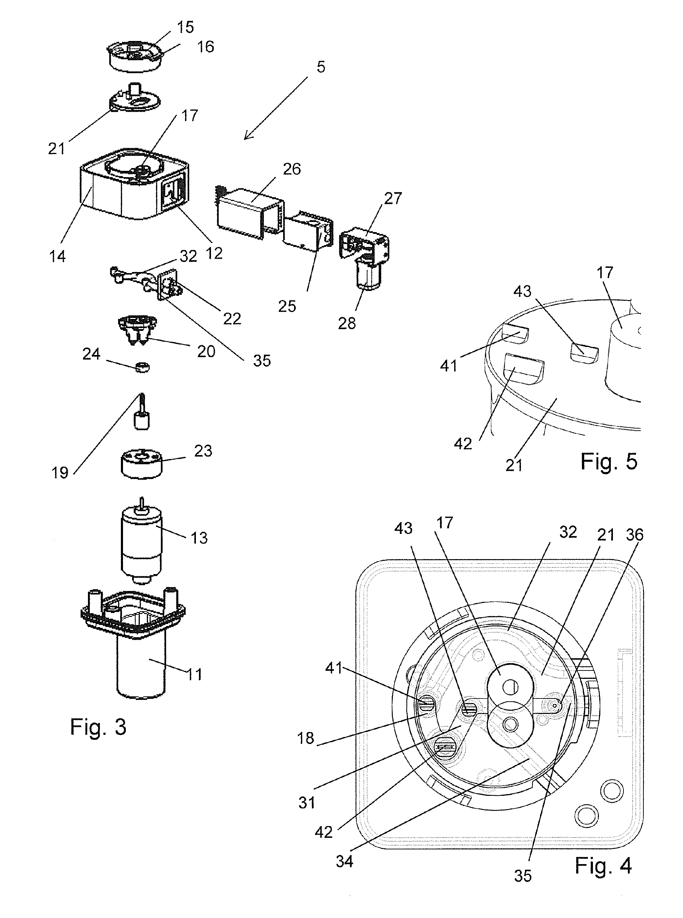

Die Elemente der Milchschäumeinheit 5 sind in der **Figur 3** in einer Explosionsdarstellung dargestellt. Ein unteres Grundgehäuseteil 11 trägt einen zur Zahnradpumpe gehörenden Elektromotor 13 sowie ein oberes Grundgehäuseteil 14. Im Grundgehäuse ist ein seitliches Fenster 12 ausgebildet.

Das obere Grundgehäuseteil 14 bildet eine ungefähr kreiszylindrische Wanne in welcher Zahnräder 17 einer Zahnradpumpe angeordnet sind. Die Zahnräder 17 der Zahnradpumpe werden über eine Welle 19 angetrieben, die mit dem Elektromotor 13 verbunden ist. Eine Dichtung 21 dichtet die Wanne nach unten ab.

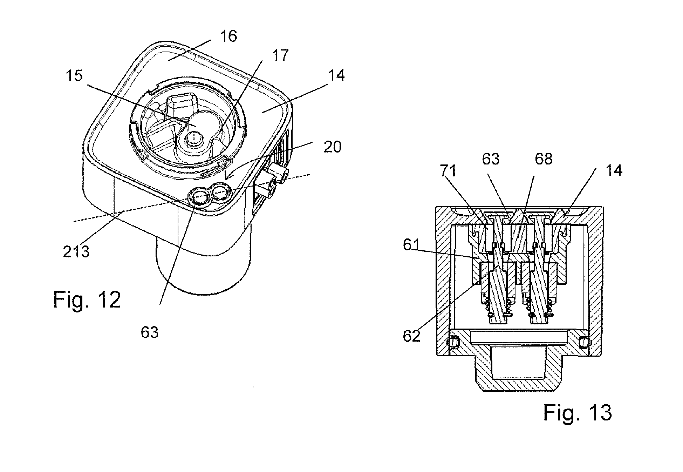

Die Zahnradpumpe kann zusätzlich zu den Zahnrädern, der Welle und dem Elektromotor auch ein eigenes Gehäuse aufweisen, oder ein solches kann in das Grundgehäuse oder andere Teile, beispielsweise einen Milchschäumeinheit-Deckel 16, integriert sein. Im dargestellten Ausführungsbeispiel ist der Milchschäumeinheit-Deckel 16 so ausgeformt, dass sich zwischen der Dichtung 21 und dem Milchschäumeinheit-Deckel 16 aufgrund einer Wölbung 15 (auch in Fig. 12 gut sichtbar) eine die Zahnräder 17 umfassende Pumpenkammer bildet.

Am Grundgehäuse 11, 14 ist auch eine Ventileinheit 20 befestigt.

Von der Ebene der Zahnradpumpe nach unten erstreckt sich ein Milchansaugrohr 18 (in Figur 3 nicht dargestellt), das im zusammengesetzten Zustand des Geräts 1 in den Milchbehälter 3 hinein und bis fast an dessen Boden ragt.

Unterseitig der Zahnradpumpe ist weiter ein Anschlussformteil 22 vorhanden. Dieses schliesst das Fenster 12 ab und bildet gleichzeitig eine Durchführung zur Verbindung der nachstehendend beschriebenen, am Grundgehäuse befestigten Leitungen des Milchschäumers einerseits und einem Andockelement andererseits.

Ebenfalls in Fig. 3 sichtbar sind ein Abstandhalter 23 und ein Motordichtungselement 24.

Das Andockelement weist einen Andockelementkörper auf, der durch ein Andockelementgehäuse 26 geschützt ist. Der Andockelementkörper wird durch einen Grundkörper 25 und ein Ergänzungsteil 27 gebildet, was nachstehend noch eingehender beschrieben wird. In Fig. 3 bereits sichtbar ist, dass das Ergänzungsteil 27 anderem einen nach unten ragenden Milchschaumauslauf 28 aufweist.

**Figur 4** zeigt eine Ansicht von oben der entlang einer über der von der Dichtung 21 definierten Dichtungsebene liegenden Ebene geschnittenen Milchschäumeinheit 5. Die helleren Linien stellen in der Ansicht an sich nicht sichtbare, weiter unten verlaufende Elemente dar.

Die Zahnradpumpe ist oberhalb der Dichtungsebene angebracht. Zur Zahnradpumpe hin führt eine oberseitige Flüssigkeitsleitung 31. Diese ist über von der Dichtung 21 gebildete Lippenventile 42, 41, die auch in **Figur 5** gut sichtbar sind, mit dem Milchansaugrohr 18 einerseits und einer Heisswasser- und/oder Dampfeinspeisungsleitung 32 andererseits verbunden. Ebenfalls über ein von der Dichtung gebildetes Lippenventil 43 ist eine Luftzuführleitung 34 mit der oberseitigen Flüssigkeitsleitung bzw. eingangsseitig mit der Zahnradpumpe verbunden.

Hinter der Zahnradpumpe ist eine Durchführung 36 für die geförderte und je nach gewähltem Betriebszustand bereits geschäumte Milch angeordnet, durch welche diese durch die Dichtungsebene wieder nach unten gelangt, wo sie durch eine Wegführleitung 35 ins Andockelement gelangt.

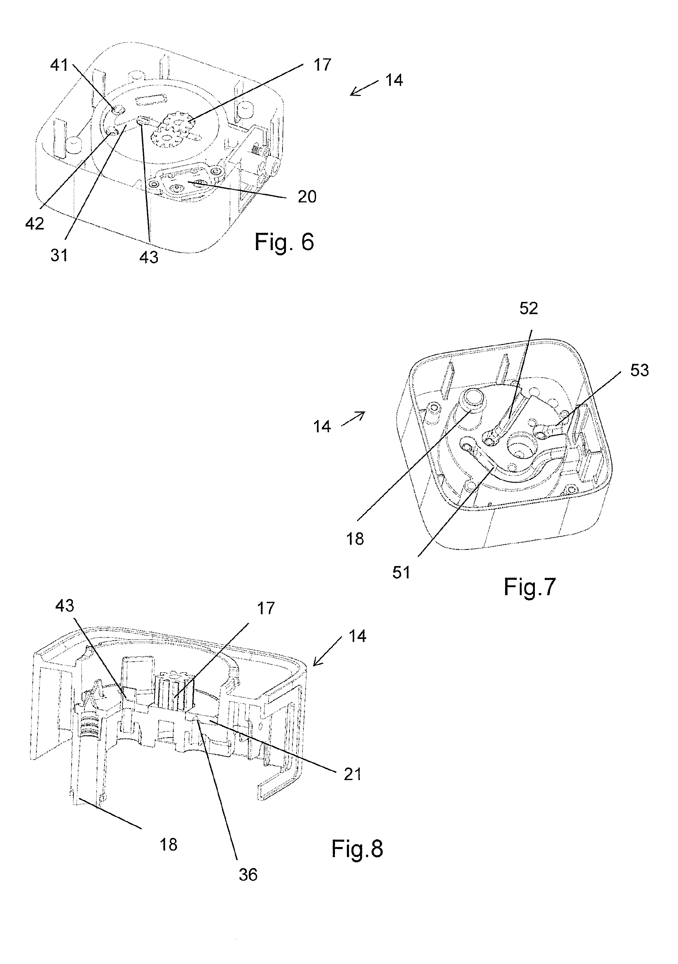

**Figuren 6 bis 8** zeigen weitere Ansichten des oberen Grundgehäuseteils 14, das in Fig. 6 entlang einer horizontalen und in Fig. 8 entlang einer vertikalen Ebene angeschnitten und in Fig. 7 in einer Unteransicht dargestellt ist.

Die unterseitigen Leitungen werden durch Schläuche des Anschlussformteils 22 gebildet, die in entsprechende Kanäle des oberen Grundgehäuseteils 14 eingelegt sind. In der Unteransicht gemäss Fig. 7 sind diese, d.h. der Kanal 51 für die Heisswasser- und/oder Dampfeinspeisungsleitung 32, der Kanal 52 für die Luftzuführleitung 34 und der Kanal 53 für die Wegführleitung 35, besonders gut sichtbar.

Die Dichtung 21 (Fig. 8) ist zwischen das obere Grundgehäuseteil 14 und den Milchschäumeinheit-Deckel (in Fig. 8 nicht gezeichnet) geklemmt. Zwischen dem Milchschäumeinheit-Deckel und dem oberen Grundgehäuseteil ist aufgrund der Wölbung 15 im Milchschäumeinheit-Deckel (Fig. 3; Fig. 12) die Pumpenkammer der Zahnradpumpe ausgebildet, welche die Zahnräder 17 umfasst.

In Figur 8 sieht man ein weiteres optionales Merkmal. Die Durchführung 36 für die geförderte und je nach gewähltem Betriebszustand bereits geschäumte Milch ist in der Art einer Drossel verengt. Dadurch wird automatisch ein gewisser Staudruck in der Zahnradpumpe erzeugt aufgrund dessen sich die Durchflussmenge regelt. Dieser Staudruck trägt zur effizienten Schäumung der kalten Milch bei.

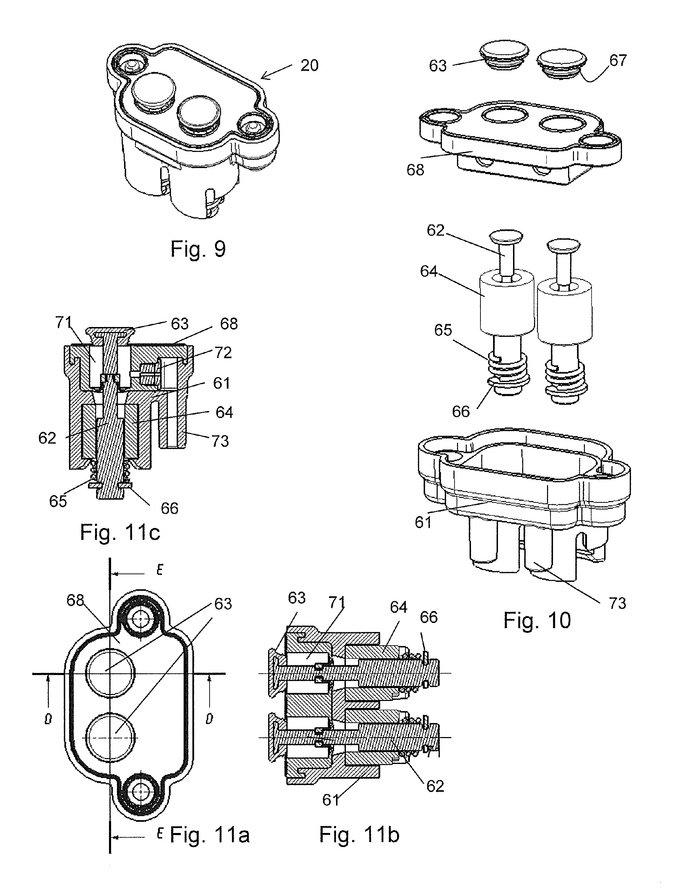

**Figur 9** zeigt eine Ansicht der Ventileinheit 20, **Figur 10** zeigt eine Explosionsdarstellung der Ventileinheit und **Figuren 11a-11c** zeigen die Ventileinheit in einer Ansicht von oben, entlang der Linie E-E in Fig. 11a geschnitten und entlang der Linie D-D in Fig. 11a geschnitten,

**Figur 12** zeigt eine Ansicht der Milchschäumeinheit mit Ventileinheit 20, ohne Andockelement und Milchansaugrohr, von oben, und **Figur 13** zeigt diese entlang einer durch die Linie 213 in Fig. 12 gehenden vertikalen Ebene geschnitten.

Die Ventileinheit 20 weist in einem gemeinsamen Ventilgehäuse 61 zwei Ventilelemente auf. Jedes Ventilelement weist ein Verschlusselement 62 auf, welches ein Dichtungselement 63 trägt und entlang einer - in der gewählten Einbausituation vertikalen - Achse bewegbar ist. Die Bewegung erfolgt nach oben durch Elektromagneten 64 und entgegen der Kraft einer Feder 65, die zwischen dem Elektromagneten (oder dem Ventilgehäuse) und einem Sicherungsring 66 eingespannt ist. Die von den Verschlusselementen und Dichtungselementen oberseitig gebildeten Köpfe der Ventilelemente ragen durch Öffnungen im oberen Grundgehäuseteil 14 (siehe Figuren 12 und 13). Im geschlossenen Zustand wird eine Dichtungspartie 67 des jeweiligen Dichtungselements 63 entlang des Umfangs der jeweiligen Öffnung durch die Kraft der Feder gegen eine Fläche des oberen Grundgehäuseteils 14 gepresst.

Zwischen der betreffenden Wand des oberen Grundgehäuseteils 14 und einer Dichtung 68 bildet sich bei beiden Ventilen je eine Ventilkammer 71 aus. Wenn das Verschlusselement mit dem Dichtungselement 63 durch den Elektromagneten angehoben ist, bildet sich eine Einströmöffnung, durch welche Luft von aussen in die betreffende Ventilkammer 71 einströmen und von dieser durch einen Luftanschlussstutzen 73 in eine (gemeinsame) Luftzuführleitung gelangen kann.

Die beiden Ventilelemente sind unabhängig voneinander ansteuerbar und können je einzeln oder zusammen geöffnet werden. Dadurch können verschiedene Ventilöffnungszustände erwirkt werden. Insgesamt ergeben sich vier Ventilöffnungszustände, indem entweder nur eines der Ventilelemente geöffnet und das andere geschlossen ist, beide geöffnet oder beide geschlossen sind.

Es kann sinnvoll sein, wenn in Ausführungsformen die Ventilelemente und/oder die Grösse der jeweils gebildeten Einströmöffnung unterschiedlich gross gewählt werden und/oder die von einem der Ventilelemente eingelassene Luft einen deutlich grösseren Strömungswiderstand erfährt als die vom anderen Ventilelement eingelassene Luft. Dann sind die vier verschiedenen definierten Öffnungszustände quantitativ verschieden. Beispielsweise kann die Einströmöffnung eines der Ventilelemente doppelt so gross sein wie die Einströmöffnung des anderen Ventilelements so dass sich die Zustände "0" (Luftventil ganz geschlossen), "1/3" (das kleinere Ventilelement geöffnet), "2/3" (das grössere Ventilelement geöffnet) und "1" (beide Ventilelemente geöffnet) anwählen lassen.

Der Ventileinheit in Luftströmungsrichtung nachgeschaltet kann ein Luftflussregelelement, wie bspw. ein 3/2-Wege-Ventil (nicht gezeichnet) angeordnet sein, durch welches wahlweise der Weg zwischen den Ventilkammern 71 und der Mischdüse oder der Weg zwischen den Ventilkammern und dem Eingang der Zahnradpumpe geöffnet und der jeweils andere Weg geschlossen werden kann, um zu regeln, ob die Mischdüse oder die Zahnradpumpe mit Luft versorgt wird. Ein solches Luftflussregelelement kann jedoch auch entfallen, wobei dann die Regelung durch die entsprechenden Ventilelemente selbsttätig erfolgt, indem sich diese nur durch Unterdruck auf der Ausgangsseite öffnen und auf diese Weise einen Rückfluss von geschäumter Milch in den jeweils nicht benötigten Weg verhindern.

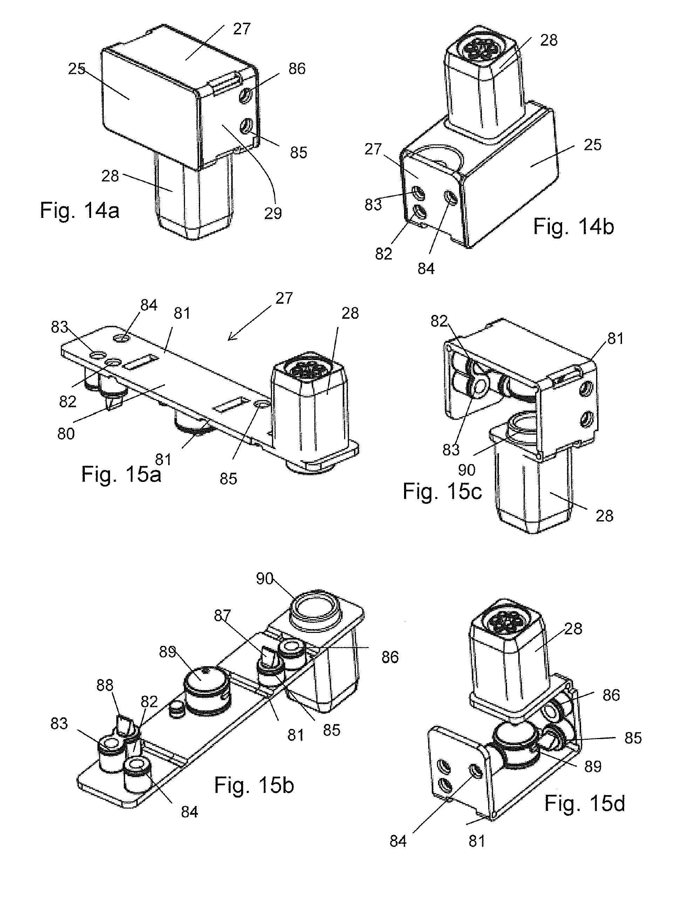

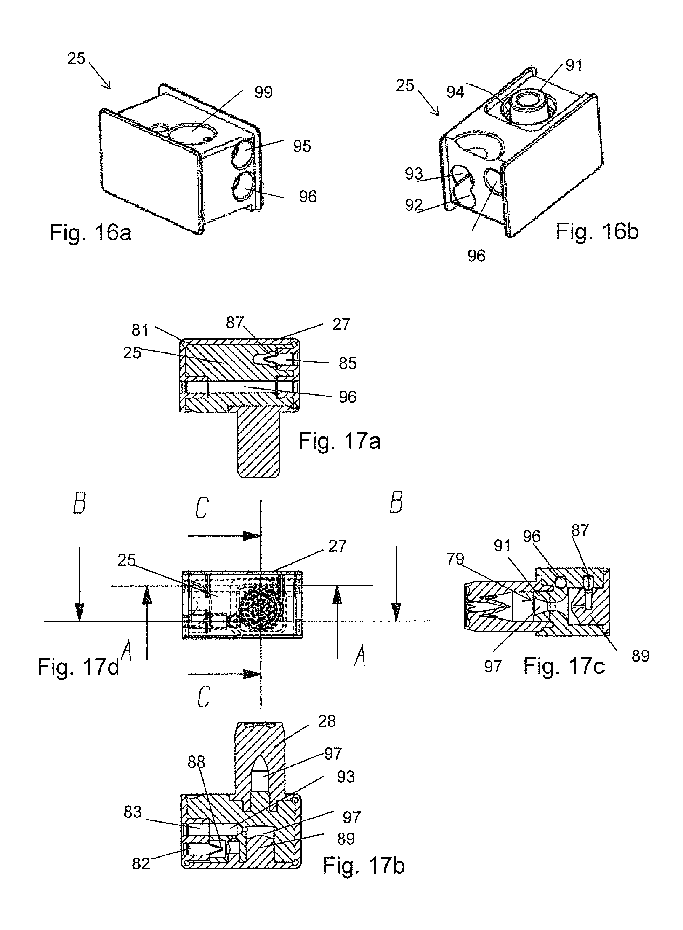

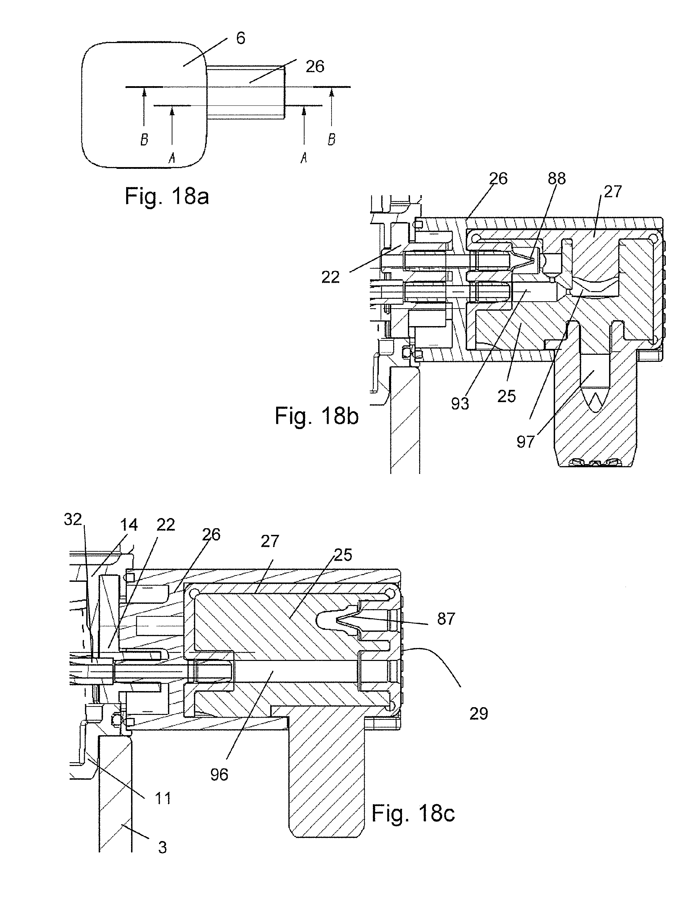

Anhand von Figuren 14a-18c werden nachstehend Aufbau und Wirkungsweise des Andockelements beschrieben. **Figuren 14a und 14b** zeigen Ansichten des Andockelements von schräg oben bzw. schräg unten. **Figuren 15a und 15b** zeigen das Ergänzungsteil 27 in abgewickelter und **Figuren 15c und 15d** in gefalteter Form. **Figuren 16a und 16b** zeigen den Grundkörper 25. **Figuren 17a, 17b und 17c** zeigen das Andockelement entlang der Ebenen A-A, B-B und C-C in **Figur 17d** geschnitten **Figur 18a** zeigt eine Ansicht des Geräts von oben, und **Figuren 18b und 18c** zeigen Ausschnitte aus Schnittdarstellungen des entlang der Ebenen A-A bzw. B-B in Figur 18a geschnittenen Geräts.

Das beispielsweise in Figuren 14a und 15c vorne liegend dargestellte stirnseitige Ende wird im Betrieb an die Kaffeemaschine angekoppelt, während das gegenüberliegende Ende an die Milchschäumeinheit 5 koppelbar ist.

Der Grundkörper 25 kann als Ganzes als Formkörper aus einem geeigneten wärmebeständigen Kunststoff ausgebildet und beispielsweise als Spritzgussteil gefertigt sein. Das Ergänzungsteil 27 ist beispielsweise aus einem Silikon gefertigt. Es ist einstückig und insgesamt flächig mit daran angeformten funktionellen Elementen. Die Gesamtheit der flächigen Abschnitte 80 wird hier als ,Basis' bezeichnet, zwischen den flächigen Abschnitten 80 sind Gelenke 81 geformt, welche durch durchgehende Öffnungen sowie rillenartige Schwächungen gebildet werden und ein zwangsloses Falten um den Grundkörper 25 ermöglichen. Die Dimensionen der flächigen Abschnitte 80 zwischen den Rillen sind auf die Dimensionen des Grundkörpers abgestimmt.

Die funktionellen Elemente des Ergänzungsteils 27 werden nebst dem Milchschaumauslauf 28 durch Durchführungen 82-86, und ein Michdüsenelement 89 gebildet.

Der Grundkörper 25 bildet eine vom kaffeemaschinenseitigen Ende zum gegenüberliegenden Ende durchgehende Durchführungsleitung 96 für (kaltes oder von der Kaffeemaschine erhitztes) Reinigungswasser oder Reinigungsdampf, welches bzw. welcher bei Bedarf von der Durchführungsleitung 96 in die Heisswasser- und/oder Dampfeinspeisungsleitung 32 und von dieser in die zu reinigenden Elemente, insbesondere die Zahnradpumpe, gelangt. Der Durchführungsleitung 96 sind kaffeemaschinenseitig und milchschäumerseitig je eine Durchführung 86; 84 des Ergänzungsteils zugeordnet.

Weiter ist ein Dampfanschluss ausgebildet, durch welchen Dampf von der Kaffeemaschine in Mischdüse gelangt. Der Dampfanschluss wird durch eine Durchführung 85 mit zugeordnetem Ventil 87 des Ergänzungsteils 27 gebildet, welche in eine Dampfanschlussöffnung 95 des Grundkörpers 25 hinein ragen.

Milchschäumerseitig sind im Grundkörper je eine Öffnung 92, 93 für die Luft- und die Milchzufuhr ausgebildet, in welche entsprechende Durchführungen 82, 83 des Ergänzungsteils hineinragen. Die Luftdurchführung 82 ist mit einem zugeordneten Ventil 88 versehen; dieses ist wie das Dampfventil 87 als Lippenventil (,Duckbill valve') ausgebildet und einstückig mit dem Rest des Ergänzungsteils 27.

Für die Mischdüse weist der Grundkörper 25 eine Mischdüsenöffnung 99 auf, in welche das Mischdüsenelement 89 hineinragt. Ausserdem sind auf der Unterseite ein Milchschaumauslauffortsatz 91 und ein diesen umgebender Positionierring 94 ausgebildet, die mit einer entsprechenden Struktur 90 des Ergänzungsteils zusammenwirken.

Die Mischdüse wird zwischen dem Mischdüsenelement und entsprechend geformten Kammern des Grundkörpers 25 ausgebildet.

Dampf, der über den Dampfanschluss eingespeist wird gelangt via das Ventil 87 in eine Mischdüsenkammer 97, was man bspw. in Fig. 17c besonders gut sieht. Durch den Dampffluss wird in der Mischdüsenkammer 97 ein Unterdruck erzeugt, durch welchen via die entsprechenden Durchführungen 82, 83 Luft und Milch angesaugt wird (Fig. 17b, Fig. 18b). In der Mischdüsenkammer entsteht Milchschaum, der durch den Milschschaumauslauf 28 nach unten gelangt und in ein bereitstehendes Trinkgefäss fliesst. Die geschäumte Milch ist aufgrund der vom Dampf abgegebenen Kondensationswärme warm.

Aufgrund der kleinen Düsenöffnung, durch welche der Dampf mit hoher Geschwindigkeit austritt, ist die Mischdüse also so ausgestaltet, dass durch die Düsenwirkung ein Unterdruck erzeugt wird. Dieser unterstützt die Förderung der Milch aus der Milchleitung auch dann, wenn die Milch aufgrund der Zahnradpumpe aktiv gefördert wird.

Wenn in der inneren Mischdüsenkammer 97 Normaldruck oder ein leichter Überdruck herrscht, sind die Lippenventile 87, 88 geschlossen. Wenn hingegen - sobald Wasserdampf einströmt, aufgrund des Bernoulli-Effekts und/oder aufgrund von Impulsübertragung - ein Unterdruck herrscht, öffnen sie sich selbsttätig.

Die Zufuhr von Luft in die Mischdüsenkammer kann anstatt durch die Ventileinheit auch direkt von aussen, bspw. über ein Lippenventil, in die Mischdüsenkammer erfolgen, wobei sich dann zwei voneinander unabhängige Luftwege für die Mischdüsenkammer einerseits und die Zahnradpumpe andererseits ergeben.

Eine solche Konstruktion mit Luftzufuhr direkt in die Mischdüsenkammer kann beispielsweise auch für Ausführungsformen gewählt werden, bei denen abweichend vom hier beschriebenen Beispiel kein elektrisch betriebenes Antriebsmittel (keine elektrisch angetriebene Pumpe) vorhanden ist und bei welchen nur dampfunterstützt, unter Nutzung der Saugwirkung der Mischdüse, geschäumt wird.

Das Andockelement ist so ausgebildet, dass der Milchschaumauslauf 28 nahe beim Auslauf für das Heissgetränk liegen kann. Zu diesem Zweck ist er in unmittelbarer Nähe zur Endfläche 29 angeordnet, welche an eine entsprechende Fläche der Getränkezubereitungsmaschine gekoppelt wird. Der Abstand beträgt wie vorstehend diskutiert nicht mehr als 2.5 cm und vorzugsweise noch weniger. Der Abstand wird wie üblich als der senkrecht auf die von der Endfläche definierte (vertikale) Ebene gemessene Abstand zwischen dieser Ebene und dem Mittelpunkt der Austrittsöffnung aus dem Milchschaumauslauf gemessen.

In Fig. 17c besonders gut sichtbar ist ein weiteres optionales Merkmal. Im Milchschaumauslauf 28 verjüngt sich die Auslaufkammer 86, durch welche die - im Allgemeinen geschäumte - Milch nach unten läuft. Das hat einerseits eine zusätzlich schaumbildende und Schaum homogenisierende Wirkung und kanalisiert andererseits den Milch- bzw. Milchschaumfluss.

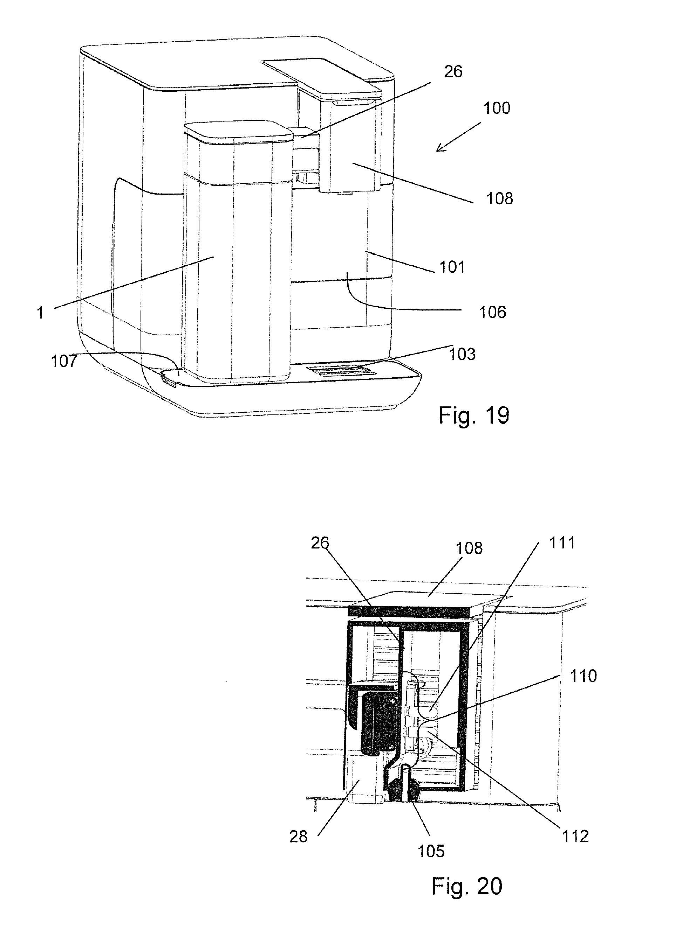

Figur 19 zeigt eine Ansicht des ganzen Getränkezubereitungssystems 100 mit dem Milchschäumergerät 1 und einer Kaffeemaschine 101, an welche das Milchschäumergerät 1 angekoppelt ist. **Figur 20** zeigt ein Detail dazu mit angeschnitten dargestellter Auslaufhaube.

Die Kaffeemaschine weist wie an sich für Kaffeemaschinen bekannt einen Wasserbehälter, eine Wasserpumpe und einen Wassererhitzer auf. Weiter ist eine Brühkammer zum Zubereiten von Kaffee aus erhitztem Wasser durch Extraktion aus Kaffeepulver vorhanden, welches Kaffeepulver beispielsweise in Portionskapseln zur Verfügung gestellt wird, die vor der Zubereitung in die Kaffeemaschine eingeworfen werden. Alternativ zu einem Portionskapselsystem kann die Kaffeemaschine auch als sogenannter Kaffeevollautomat ausgebildet sein, welcher auch eine Kaffeemühle aufweist und das Kaffeepulver portionsweise mahlt und der Brühkammer zuführt. Als noch weitere Alternative - insbesondere wenn die Kaffeemaschine als Kolbenmaschine ausgebildet ist, d.h. die Brühkammer zwischen einem festen Teil und einem entfernbaren Kolben ausgebildet ist, kann auch vorgesehen sein, dass das Kaffeepulver vom Benutzer im bereits gemahlenen Zustand, aber lose in die Brühkammer eingebracht wird.

Weiter kann die Kaffeemaschine einen Auffangbehälter für verbrauchte Kaffeepulverportionen (in Kapseln oder lose, je nach Ausgestaltung der Kaffeemaschine) aufweisen.

An der Kaffeemaschine ist eine Abstellplattform 103 zum Abstellen eines Trinkgefässes ausgebildet. Diese kann beispielsweise durch einen Gitterrost gebildet sein, unter welchem sich eine Auffangschale befindet. In Ausführungsformen kann die Abstellplattform auf geeignete Art höhenverstellbar sein.

Über der Abstellplattform 103 befindet sich ein Kaffeeauslauf 105, durch welchen der gebrühte Kaffee ausläuft und in das darunter liegende Gefäss gelangt. Dieser befindet sich unter einer Auslaufhaube 108, welche einen Teil des Kaffeemaschinengehäuses bildet und den Auslauf nach vorne und zu den Seiten hin mindestens teilweise abdeckt.

Die Kaffeemaschine 101 bildet eine Front 106 von welcher wie an sich von anderen Kaffeemaschinen bekannt einerseits die Abstellplattform 103 und andererseits darüber die Auslaufhaube 108 vorsteht.

Ebenfalls vor der Front steht hier eine Milchschäumerplattform 107 vor, auf welche des angedockte Milchschäumergerät 1 abgestellt ist.

In der Nähe des Kaffeeauslaufs 105 und hier unter der Auslaufhaube befindet sich eine Anschlussstelle 110 zum Anschliessen des Andockelements an die Kaffeemaschine. Diese Anschlussstelle weist eine Dampfabgabestelle 111 zum Koppeln an den Dampfanschluss des Andockelements, eine Heisswasser- und/oder Dampfabgabestelle 112 zum Koppeln an die Durchführungsleitung 83 auf. Die Dampfabgabestelle 111 und die Heisswasser- und/oder Dampfabgabestelle 112 werden bei Bedarf vom Wassererhitzer her mit Dampf bzw. Heisswasser versorgt, wobei ein Mehrwegeventil im Innern der Kaffeemaschine erhitzte Flüssigkeit bzw. Dampf wahlweise dem Brühmodul, der Dampfabgabestelle oder der Heisswasser- und/oder Dampfabgabestelle 112 zuführen kann.

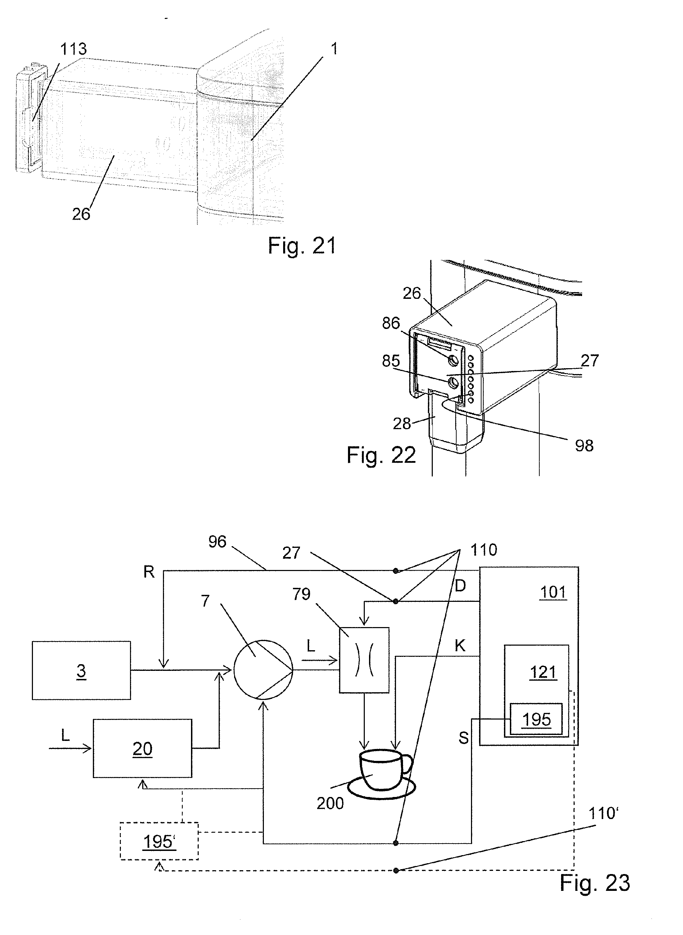

Weiter weist die Anschlussstelle elektrische Kontakte 113 auf, die in **Figur 21** schematisch dargestellt sind. Diese elektrischen Kontakte 113 bilden eine getränkezubereitungsmaschinenseitige Schnittstelle und stellen bei angekoppeltem Andockelement eine elektrische Verbindung zu entsprechenden elektrischen Anschlusselementkontakten her, welche mit durch das Andockelement führenden elektrischen Leitern verbunden sind oder durch diese gebildet werden. Diese elektrischen Leiter versorgen die elektrisch angetriebenen Elemente des Milchschäumergeräts, namentlich die Zahnradpumpe, mit Strom und gegebenenfalls Steuersignalen.

Dabei ist sowohl möglich, eine Steuerung dieser elektrisch angetriebenen Elemente im Milchschäumergerät vorzusehen (dieses ist dann mit den nötigen elektronischen Einheiten versehen und empfängt Steuerungssignale von der Kaffeemaschine oder von einer Eingabeeinheit des Milchschäumergeräts her), als auch eine Steuerung dieser Elemente in der Kaffeemaschine selbst unterzubringen. Im letzteren Fall werden durch die elektrischen Leitungen im Wesentlichen lediglich Ströme geleitet, welche die elektrisch angetriebenen Elemente entsprechend den Vorgaben der Steuerung antreiben.

Das Andocken des Milchschäumergeräts 1 erfolgt von der Seite her an die Auslaufhaube 108, und zwar so, dass das Milchschäumergerät als Ganzes vor der Kaffeemaschine und seitlich der Auslaufhaube 108 angeordnet ist. Das Andocken erfolgt beispielswiese durch eine einfache lineare seitliche Bewegung des zusammengesetzten Milchschäumergeräts der Front 106 entlang.

Wie man in **Figur 21** (das Milchschäumergerät 1 abgekoppelt zeigend) und insbesondere in **Figur 22** (Milchschäumergerät ohne Kaffeemaschine) sieht, sind die elektrischen Leiter und die entsprechenden andockelementseitigen Kontakte 98 am Andockelementgehäuse 26 ausgebildet. Die Leiter können durch isolierte Drähte oder Litzenleiter oder durch Leiterbahnen einer gedruckten Schaltung (Leiterplatte oder Flexprint) oder ähnlich gebildet werden.

Die Steuerung der Zahnradpumpe ist insbesondere so eingerichtet, dass die Drehzahl der Zahnräder 17 verstellbar, d.h. anwählbar ist. Dadurch kann der Benutzer die Fördergeschwindigkeit und - gemäss dem nachstehend noch eingehender beschriebenen Vorgehen - gegebenenfalls die Zubereitung von kalter geschäumter Milch steuern.

**Figur 23** zeigt ein Übersichtsschema des Milchschäumergeräts und von dessen Ankopplung an die Getränkezubereitungsmaschine (Kaffeemaschine 101). In der Figur bezeichnet "L" Luftzuführungen. Der Buchstabe D bezeichnet eine Leitung für Dampf, K eine Leitung für das Heissgetränk, R eine Leitung für Reinigungswasser- oder Dampf (optional), und S bezeichnet die Stromversorgung.

Die Ansteuerung 195 ist hier als Teil einer Elektronikeinheit 121 der Kaffeemaschine 101 dargestellt. Die Elektronikeinheit 121 ist bspw. eingerichtet, durch eine Messung eine Kapsel zu erkennen und/oder eine Benutzereingabe entgegenzunehmen, bspw. über ein geeignetes Bedienelement mit einer entsprechenden Taste, einem Touch Screen und/oder dergleichen.

Die Ansteuerung 195 ist hier so ausgebildet, dass sie sowohl die Zahnradpumpe 7 als auch die Ventileinheit 20 ansteuern kann, wobei ein Betriebsparameter des Zahnrads und/oder der Ventileinheit regelbar ist. Über die Anschlussstelle 110 laufen direkt Ansteuersignale für die Ventileinheit 20 und/oder die Zahnradpumpe 7.

Alternativ zum Anbringen der Ansteuerung ganz oder teilweise in der Kaffeemaschine kann eine Ansteuerung 195' auch ganz oder teilweise als Teil des Milchschäumergeräts vorhanden sein. Diese Alternative ist in der Figur 20 gestrichelt dargestellt. Über die alternative Schnittstelle 110' werden dann elektrische Energie und ggf. Datensignale von der Elektronikeinheit an die Ansteuerung 195' übertragen.

Mit dem Bezugszeichen 79 wird die Mischdüse als Ganze bezeichnet.

Das Milchschäumergerät kann wie folgt betrieben werden:

Für die Zubereitung von kalter geschäumter Milch wird die Zahnradpumpe in Gang gesetzt, während mindestens eines der Ventilelemente der Ventileinheit 20 geöffnet ist. Durch die Wirkung der Zahnradpumpe wird an deren Eingangsseite ein Unterdruck erzeugt, welcher sowohl Milch - durch das Milchansaugrohr 18 und das entsprechende Lippenventil 42 - als auch, durch die Ventileinheit 20 und das entsprechende Lippenventil 43, Luft ansaugt. In der Zahnradpumpe entsteht so Milchschaum, der durch die Durchführung 36 - deren Enge die Bildung von feinporigem Schaum begünstigt -, die Wegführleitung und das Andockelement 25 zum Milchschaumauslauf 28 gelangt und dort abgegeben wird, wobei im Allgemeinen ein Trinkgefäss 200 auf die Plattform 103 abgestellt wird.

Auch für die Zubereitung von warmer geschäumter Milch erfolgt das Ansaugen der - im Allgemeinen kalten - Milch aus dem Milchbehälter 3 über die Zahnradpumpe. Diese fördert die Milch in die Mischdüse. Dieser wird gleichzeitig von der Kaffeemaschine her über den Dampfanschluss Wasserdampf zugeführt. Der Wasserdampf erzeugt wie vorstehend dargestellt einen Unterdruck, welcher einerseits einen zusätzlichen Sog auf die Milch ausübt und die Förderung durch die Zahnradpumpe unterstützt und andererseits durch das ebenfalls mindestens teilweise geöffnete Ventilelement 20 Luft ansaugt. In der Mischdüsenkammer 97 wird die Milch mit dem Wasserdampf vermischt, was sie erwärmt, und es wird gleichzeitig Luft untergemischt, so dass sich Luftbläschen bilden und Milchschaum entsteht. Die warme, geschäumte Milch wird durch den Milchschaumauslauf abgegeben.

Je nach dem kann wie erwähnt ein 3/2-Wegeventil oder ein anderes Mittel wahlweise das Ventilelement 20 mit der Zahnradpumpe 7 oder der Mischdüsenkammer 97 verbinden für das Erzeugen des kalten bzw. warmen Milchschaums. Wie erwähnt ist auch möglich, dass die Luftzufuhr in die Mischdüsenkammer direkt und nicht über das Ventilelement 20 erfolgt, in welchem Fall dann die Luftzufuhr bei der Erzeugung von warmem Milchschaum nicht durch ein separates Mittel regelbar ist.

Es kann vorgesehen sein, dass der Benutzer auch kalte Milch bloss fördern kann. In diesem Fall wird die Zahnradpumpe angetrieben, es bleiben aber die Ventilelemente geschlossen, und es wird auch kein Dampf zugeführt.

Weiter kann vorgesehen sein, dass der Benutzer warme Milch zubereiten kann. In diesem Fall ist das Ventilelement, durch welches Luft in die Mischdüse gelangen kann, verschlossen. Auch beim Vorsehen eines separaten Ventils für die Mischdüsenkammer (abweichend von der in den Figuren dargestellten Ausführungsform) besteht die Möglichkeit, das entsprechende Ventil verschliessbar auszugestalten. Ein Verschliessen des Ventils kann bspw. auch mechanisch von Hand durch den Benutzer vorgesehen sein. Zum Zubereiten von warmer Milch wird die Milch aus dem Milchbehälter 3 durch die Zahnradpumpe gefördert und gleichzeitig in der Mischdüse 79 Wasserdampf zugeführt ohne dass auch Luft zugeführt würde. Durch das Vermischen der kalten Milch mit dem Wasserdampf entsteht warme Milch, die dann über den Milchschaumauslauf 28 abgegeben wird.

Zum Reinigen an Ort und Stelle wird ein Gefäss unter den Milchschaumauslauf 28 gestellt, und es wird durch die Durchführungsleitung 96 und die Heisswasser- und/oder Dampfeinspeisungsleitung 32 warmes Wasser oder Dampf zugeführt. Gleichzeitig wird die Zahnradpumpe in Gang gesetzt.

Das Milchschäumergerät ist jedoch auch sehr einfach zu reinigen, nachdem es entfernt wurde. Der Milchbehälter 3 und der Deckel 6 können problemlos spülmaschinenfest ausgestaltet sein. Die Milchschäumeinheit 5 kann ebenfalls einfach auseinander genommen und gereinigt werden, wobei sehr nützlich ist, dass die Dichtung 21 mit den Lippenventilen 41, 42, 43 einstückig ist und bündig mit der Oberfläche des oberen Grundgehäuseteils 14 abschliesst.

Das Andockelement schliesslich ist deshalb einfach zu reinigen, weil die mit Milch in Berührung kommenden Teile (Grundkörper 25, Ergänzungsteil 27) einfach auseinander genommen werden können, spülmaschinenfest ausgestaltet sein können und auch einfach und nur in einer einzigen - richtigen - Konfiguration wieder zusammengesetzt werden können.

Viele Varianten sind denkbar. Nebst den bereits diskutierten Optionen besteht auch die Möglichkeit, die Leitungen für kalten Milchschaum (von der Pumpe her) und für warmen Milchschaum (in der Mischdüse hergestellt) bis zum Auslauf voneinander separat zu halten, d.h. der kalte Milchschaum wird dann nicht durch die Mischdüse geleitet. Der Milchschaumauslauf kann dann voneinander separate Öffnungen für den kalten und den warmen Milchschaum aufweisen, bspw. zueinander konzentrisch. Auch gänzlich separate Milchschaumausläufe für den kalten und den warmen Milchschaum sind denkbar; in diesem Fall gelten beispielsweise die vorstehend diskutierten optionalen Bedingungen für den Maximalabstand zwischen dem Milchschaumauslauf und dem Heissgetränkeauslauf für den Auslauf des warmen Milchschaums, da es oft dieser ist, der mit dem Heissgetränk gemischt wird.

### Bezugszeichenliste:

- 1: Milchschäumergerät
- 3: Milchbehälter
- 5: Milchschäumeinheit
- 6: Deckel
- 7: Zahnradpumpe
- 11: unteres Grundgehäuseteil
- 12: Fenster
- 13: Elektromotor
- 14: oberes Grundgehäuseteil
- 15: Wölbung (im Milchschäumeinheit-Deckel)
- 16: Milchschäumeinheit-Deckel
- 17: Zahnräder
- 18: Milchansaugrohr
- 19: Welle
- 20: Ventileinheit
- 21: Dichtung
- 22: Anschlussformteil
- 23: Abstandhalter
- 24: Motordichtungselement
- 25: Grundkörper (des Andockelements)
- 26: Andockelementgehäuse
- 27: Ergänzungsteil
- 28: Milchschaumauslauf
- 29: Endfläche
- 31: Flüssigkeitsleitung
- 32: Heisswasser- und/oder Dampfeinspeisungsleitung
- 34: Luftzuführleitung
- 35: Wegführleitung
- 36: Durchführung
- 41: Lippenventil
- 42: Lippenventil
- 43: Lippenventil
- 51: Kanal für die Heisswasser- und/oder Dampfeinspeisungsleitung
- 52: Kanal für die Luftzuführleitung
- 53: Kanal für die Wegführleitung
- 61: Ventilgehäuse
- 62: Verschlusselement
- 63: Dichtungselement
- 64: Elektromagnet
- 65: Feder
- 66: Sicherungsring
- 67: Dichtungspartie
- 68: Dichtung
- 71: Ventilkammer
- 73: Luftanschlussstutzen
- 79: Mischdüse
- 80: flächige Abschnitte
- 81: Gelenk
- 82: Luftdurchführung
- 83: Durchführung (für Milch)
- 84: Durchführung für Heisswasser oder Dampf
- 85: Durchführung für Dampf
- 86: Durchführung für Heisswasser oder Dampf
- 87: Lippenventil
- 88: Lippenventil
- 89: Mischdüsenelement
- 90: (Ring-)Struktur für Positionierring
- 91: Milchschaumauslauffortsatz
- 92: Öffnung für Luftzufuhr
- 93: Öffnung für Milchzufuhr
- 94: Positionierring
- 95: Dampfanschlussöffnung
- 96: Durchführungsleitung
- 97: Mischdüsenkammer
- 98: (elektrische) Kontakte
- 99: Mischdüsenöffnung
- 100: Getränkezubereitungssystem
- 101: Kaffeemaschine
- 103: Abstellplattform
- 105: Kaffeeauslauf
- 106: Front
- 107: Milchschäumerplattform
- 108: Auslaufhaube
- 110: Anschlussstelle
- 110': alternative Schnittstelle
- 111: Dampfabgabestelle
- 112: Heisswasser- und/oder Dampfabgabestelle
- 113: elektrische Kontakte
- 121: Elektronikeinheit
- 195: Ansteuerung
- 195': alternative Ansteuerung
- 200: Trinkgefäss

## Patentansprüche

1. An eine Getränkezubereitungsmaschine (101) andockbares Gerät (2) zum Zubereiten von geschäumter Milch aufweisend einen Anschluss für von der Getränkezubereitungsmaschine erzeugten Wasserdampf und eine Milchschäumeinheit (5) mit einer Zahnradpumpe (7), die eingangsseitig mit einer Milchzuführleitung und einer Luftzuführung verbunden ist, **gekennzeichnet durch** eine Schnittstelle (98) für von der Getränkezubereitungsmaschine abgegebenen Strom zum Betreiben der Zahnradpumpe und eine Mischdüse (79) auf einem Pfad von von der Zahnradpumpe geförderter Milch, wobei die Milch, der Wasserdampf sowie Luft der Mischdüse (79) zuführbar sind.

2. Gerät nach Anspruch 1, wobei die Mischdüse (79) so ausgebildet ist, dass vom Anschluss her einströmender Wasserdampf eine Saugwirkung erzielt und aufgrund dieser Saugwirkung Luft in die Mischdüse gesaugt wird.

3. Gerät nach Anspruch 2, wobei die Luftzuführung in die Mischdüse ein Ventil (88) aufweist, das bei einströmendem Wasserdampf aufgrund eines dadurch erzeugten, die genannte Saugwirkung erzielenden Unterdrucks in der Mischdüse selbsttätig öffnet.

4. Gerät nach Anspruch 3, wobei das Ventil (88) ein Lippenventil ist.

5. Gerät nach einem der vorangehenden Ansprüche, wobei die Mischdüse (79) so ausgebildet ist, dass vom Anschluss her einströmender Wasserdampf eine Saugwirkung erzielt, welche auf in die Mischdüse fliessende Milch einwirkt.

6. Gerät nach einem der vorangehenden Ansprüche, wobei die Mischdüse (79) in Flussrichtung der Milch nach der Zahnradpumpe (7) angeordnet ist.

7. Gerät nach Anspruch 6, wobei die Mischdüse unmittelbar über einem Milchschaumauslauf (28), durch welchen die geschäumte Milch aus dem Gerät austritt, angeordnet ist.

8. Gerät nach einem der vorangehenden Ansprüche, wobei die Luftzuführung in zur Zahnradpumpe mit Mitteln versehen ist, diese wahlweise zu schliessen.

9. Gerät nach Anspruch 8, wobei die Mittel zum wahlweisen Schliessen der Luftzuführung eine ansteuerbare Ventileinheit (20) aufweisen, und dass auch der Mischdüse (19) Luft über die Ventileinheit (20) zuführbar ist.

10. Gerät nach einem der vorangehenden Ansprüche, aufweisend eine Milchschäumeinheit (5) mit der Zahnradpumpe, wobei die Milchschäumeinheit (5) ein Gehäuse (11, 14, 16) aufweist, durch welches eine Zahnradpumpenkammer ausgebildet ist, welche nach unten durch eine Dichtung (21) begrenzt wird, wobei die Dichtung als zusammenhängendes Objekt mit mindestens einer Ventilöffnung (42) für angesaugte Milch ausgebildet ist.

11. Gerät nach einem der vorangehenden Ansprüche, aufweisend einen weiteren Anschluss für von der Getränkezubereitungsmaschine abgegebenes Wasser und/oder für Wasserdampf, wobei von diesem weiteren Anschluss aus eine Leitung (32) zu einem Ort in Flussrichtung vor der Zahnradpumpe (7) führt.

12. Gerät nach einem der vorangehenden Ansprüche, aufweisend einen Behälter (3) zum Aufnehmen von Milch sowie eine Milchschäumeinheit (5) mit der Zahnradpumpe (7), wobei die Milchschäumeinheit (5) und der Behälter (3) in ihrer Geometrie so aufeinander abgestimmt sind, dass die Milchschäumeinheit auf dem Behälter (3) diesen abschliessend platzierbar ist.

13. Gerät nach Anspruch 12, aufweisend einen Deckel, der sowohl auf die auf dem Behälter (3) platzierte Milchschäumeinheit (5) als auch direkt auf den Behälter (3) passt.

14. Getränkezubereitungssystem, aufweisend ein Gerät nach einem der vorangehenden Ansprüche sowie eine Getränkezubereitungsmaschine, an welche das Gerät ankoppelbar ist.
